(19) 

**Europäisches Patentamt**
**European Patent Office**
**Office européen des brevets**

(11) **EP 2 058 189 A1**

(12) **EUROPEAN PATENT APPLICATION**
published in accordance with Art. 153(4) EPC

(43) Date of publication:
**13.05.2009 Bulletin 2009/20**

(21) Application number: **07831422.6**

(22) Date of filing: **08.11.2007**

(51) Int Cl.:
*B60T 8/17* (2006.01)  *B60T 7/06* (2006.01)
*B60T 13/12* (2006.01)  *B66F 9/22* (2006.01)
*B66F 9/24* (2006.01)

(86) International application number:
**PCT/JP2007/071691**

(87) International publication number:
**WO 2008/056729 (15.05.2008 Gazette 2008/20)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **09.11.2006 JP 2006303779**

(71) Applicant: **Mitsubishi Heavy Industries, Ltd.**
**Tokyo 108-8215 (JP)**

(72) Inventors:
• **FUTAHASHI, Kensuke**
**Takasago-shi**
**Hyogo 676-8686 (JP)**
• **KAWAGUCHI, Masataka**
**Takasago-shi**
**Hyogo 676-8686 (JP)**
• **UCHIDA, Munenobu**
**Sagamihara-shi**
**Kanagawa 229-1193 (JP)**

(74) Representative: **Henkel, Feiler & Hänzel**
**Patentanwälte**
**Maximiliansplatz 21**
**80333 München (DE)**

(54) **BRAKING DEVICE FOR WORKING VEHICLE AND WORKING VEHICLE**

(57) A commercial vehicle in which the amount of energy collected by regenerative braking is increased and a decrease in reliability is prevented is provided. The commercial-vehicle braking system includes: a brake operating member(9) that a driver operates; an operating-amount detecting section (11) that detects the operating amount of the brake operating member (9); a regenerating section (35) that brakes the rotation of wheels (33) by converting the rotation of the wheels (33) to electrical energy; a control unit (39) that controls the regenerating section (35) on the basis of an output of the operating-amount detecting section (11); a transfer section (17) that, when the operating amount is smaller than a predetermined value, blocks transfer of the operating amount and, when the operating amount is larger than the predetermined value, transfers an operating amount obtained by subtracting the predetermined value from the operating amount; and a braking section (45) that brakes the rotation of the wheels (33) by a frictional force on the basis of the operating amount transferred from the transfer section (17).

FIG. 1

**EP 2 058 189 A1**

**Description**

Technical Field

The present invention relates to commercial-vehicle braking systems and commercial vehicles and, in particular, to a commercial-vehicle braking system and a commercial vehicle, equipped with an electric motor as the power source, for performing tasks such as cargo handling and construction.

Background Art

Commercial vehicles that use an electric motor (a motor) as a power source, for example, battery-powered commercial vehicles that are driven only by a motor and hybrid-powered commercial vehicles that are driven by a motor and an engine, employ a known method of regenerative braking using the motor as a generator during braking to collect the kinetic energy of the vehicles as electrical energy (for example, refer to Patent Documents 1 and 2).

The above-described regenerative braking generally adopts a method of calculating a braking torque from the operating amount of the brake pedal and generating the calculated braking torque with the motor to obtain a braking force and a regenerative force.

The above-described regenerative braking using the motor often also uses standard mechanical braking as a backup when the braking force is insufficient or when it is not possible to completely generate the braking force because of battery overcharging or a motor fault.

The braking force due to mechanical braking is generated as follows.

For example, when a brake pedal is depressed, a master cylinder connected thereto by a link mechanism is compressed. The compressed master cylinder generates a brake pressure. The brake pressure is transmitted to a brake cylinder. The brake cylinder pushes out a drum brake, and the drum brake presses against the inner surface of a wheel. A frictional force caused between the pushed drum brake and the wheel generates a braking force.

Patent Document 1: Japanese Unexamined Patent Application, Publication No. 2004-338546
Patent Document 2: Japanese Unexamined Patent Application, Publication No. Hei-10-271608

Disclosure of Invention

Battery-powered commercial vehicles and hybrid-powered commercial vehicles use both mechanical braking and motor-based regenerative braking during braking to exploit the braking force of the motor and to collect the kinetic energy.

However, the simultaneous use of mechanical braking and motor-based regenerative braking has a problem in that the mechanical braking acts dominantly and the amount of energy collected by the motor decreases significantly.

The present invention is made to solve the above problem. Accordingly, it is an object of the present invention to provide a commercial vehicle in which the amount of energy collected by regenerative braking is increased and a decrease in reliability is prevented.

To achieve the above object, the present invention provides the following solutions.

According to a first aspect of the present invention, there is provided a commercial-vehicle braking system including: a brake operating member that a driver operates; an operating-amount detecting section that detects the operating amount of the brake operating member; a regenerating section that brakes the rotation of wheels by converting the rotation of the wheels to electrical energy; a control unit that controls the regenerating section on the basis of an output of the operating-amount detecting section; a transfer section that, when the operating amount is smaller than a predetermined value, blocks transfer of the operating amount and, when the operating amount is larger than the predetermined value, transfers an operating amount obtained by subtracting the predetermined value from the operating amount; and a braking section that brakes the rotation of the wheels by a frictional force on the basis of the operating amount transferred from the transfer section.

According to the first aspect of the present invention, when the operating amount of the brake operating member is smaller than a predetermined value, regenerative braking is performed by the regenerating section in accordance with the output of the operating-amount detecting section, whereas the operating amount is not transferred from the transfer section to the braking section, so that frictional braking is not performed by the braking section.

That is, the kinetic energy of the commercial vehicle is converted to electrical energy by the regenerating section without being consumed by frictional braking during the initial braking of the commercial vehicle (when the operating amount is smaller than a predetermined value). This improves the degree of collection of electrical energy.

If the operating amount is greater than or equal to the predetermined value, regenerative braking is performed by the regenerating section in accordance with the output of the operating-amount detecting section, and the operating amount is transferred from the transfer section to the braking section to perform also frictional braking by the braking section.

Therefore, if the braking force only due to regenerative braking is insufficient for braking a commercial vehicle, regenerative braking and frictional braking can be performed at the same time by increasing the operating amount of the brake operating member, thus ensuring sufficient braking force to brake the commercial vehicle.

Also when sufficient regenerative braking is not performed because of overcharging of the battery that stores regenerated electricity, frictional braking can be performed by increasing the degree of depression of the brake operating member, thus ensuring a braking force for braking the commercial vehicle.

The predetermined value of the operating amount is set to achieve the balance between an improvement in energy collection by regenerative braking and ensuring reliability of braking by frictional braking.

In the above invention, it is preferable that a reaction-force generating section that generates a reaction force against the operation of the brake operating member be provided.

This allows the driver to receive a reaction force (resisting force) when operating the brake operating member even if the operating amount of the brake operating member is smaller than the predetermined value. Therefore, the driver can obtain the same operative sensation as the conventional commercial vehicle equipped with only the braking section.

In the above configuration, it is preferable that the reaction-force generating section be an elastic member that generates the reaction force by deforming in accordance with the operating amount; and a reaction-force adjusting unit be further provided which adjusts the strength of the reaction force by changing the disposition of the reaction-force generating section.

This configuration allows the strength of the reaction force generated to be changed in proportion to the operating amount. This provides the same operative sensation as the conventional commercial vehicle equipped with only the braking section.

The minimum operating amount at which a reaction force is generated and the strength of the reaction force to be generated can be adjusted by adjusting the deformation of the elastic member by changing the disposition of the reaction-force generating section in the moving direction of the brake operating member by the reaction-force adjusting unit. This allows, for example, the range of the operating amount in which only regenerative braking acts and a reaction force transferred to the driver to be adjusted according to the speed of the commercial vehicle, thus providing a constant braking force and deceleration.

In the above configuration, it is preferable that the reaction-force generating section be an elastic member that generates the reaction force by deforming in accordance with the operating amount; one of a bottomed-tube-shaped reaction-force cylinder and a rod-like reaction-force piston disposed in the reaction-force cylinder so as to be capable of moving relative thereto be disposed at one end of the elastic member; a reaction-force space between the reaction-force cylinder and the reaction-force piston be filled with liquid; and a reaction-force control valve that controls the flow of the liquid be provided in a flow channel connecting the outside of the reaction-force cylinder and the reaction-force space.

With this configuration, while the reaction-force control valve is opened, the liquid flows into and out from the reaction-force space through the flow channel. This allows the reaction-force cylinder and the reaction-force piston to move relative to each other to allow the elastic member to move freely. Thus, no reaction force is generated in the range of an operating amount in which only regenerative braking acts. On the other hand, when the reaction-force control valve is closed, the liquid is sealed in the reaction-force space to prevent the reaction-force cylinder and the reaction-force piston from moving relative to each other. Thus, a reaction force is generated also in the range of an operating amount in which only regenerative braking acts.

Therefore, while the brake operating member is operated with the same power as that while the reaction-force control valve is closed, the operating amount easily exceeds the range of an operating amount in which only regenerative braking acts to immediately start braking by the braking section.

In the above invention, it is preferable that the braking section include a pressure generating section that increases the pressure of fluid on the basis of the operating amount transferred from the transfer section and a friction generating section that generates a frictional force between the friction generating section and the wheels on the basis of the pressure of the fluid.

This configuration can increase fluid pressure in accordance with the operating amount and allows a frictional braking force to be generated in accordance with the fluid pressure. Thus, even if the pressure generating section and the friction generating section are arranged at separate positions, the plurality of wheels can be acted upon by a braking force of substantially the same strength substantially at the same time.

In the above invention, it is preferable that the braking section include a pressure generating section that increases the pressure of fluid on the basis of the operating amount transferred from the transfer section and a friction generating section that generates a frictional force between the friction generating section and the wheels on the basis of the pressure of the fluid; the transfer section include an input unit connected to the brake operating member and an output unit connected to the pressure generating section and disposed so as to be capable of moving relative to the input unit; and at least one of the input unit and the output unit have a restricting portion that restricts the distance of the relative movement.

This configuration prevents the operating amount of the brake operating member from being transferred from the input unit to the output unit because the input unit and the output unit move relative to each other. On the other hand, if the distance of the relative movement of the input unit and the output unit increases and the relative movement is restricted by the restricting portion, the operating amount of the brake operating member is transferred from the input unit to the output unit.

In the above invention, it is preferable that the braking section include a pressure generating section that increases the pressure of fluid on the basis of the operating amount transferred from the transfer section and a friction generating section that generates a frictional force between the friction generating section and the wheels on the basis of the pressure of the fluid; the transfer section include an input unit connected to the brake operating member and an output unit connected to the pressure generating section and disposed so as to be capable of moving relative to the input unit; at least one of the input unit and the output unit have a restricting portion that restricts the distance of the relative movement; and a transfer adjusting unit that adjusts the distance of the relative movement of the input unit and the output unit be provided.

With this configuration, the minimum operating amount of the brake operating member at which the frictional braking by the braking section acts can be adjusted by adjusting the distance of the relative movement. This allows, for example, the range of the operating amount in which only regenerative braking acts to be adjusted according to the speed of the commercial vehicle, thus providing a constant braking force and deceleration with the same operating amount.

In the above invention, it is preferable that the braking section include a pressure generating section that increases the pressure of fluid on the basis of the operating amount transferred from the transfer section and a friction generating section that generates a frictional force between the friction generating section and the wheels on the basis of the pressure of the fluid; the transfer section include an input unit connected to the brake operating member and an output unit connected to the pressure generating section and disposed so as to be capable of moving relative to the input unit; at least one of the input unit and the output unit have a restricting portion that restricts the distance of the relative movement; one of the input unit and the output unit be a bottomed-tube-shaped transfer cylinder and the other be a rod-like transfer piston disposed in the transfer cylinder so as to be capable of moving relative thereto; the transfer space between the transfer cylinder and the transfer piston be filled with liquid; and a transfer control valve for controlling the flow of the liquid be provided in a flow channel connecting the outside of the transfer cylinder and the transfer space.

With this configuration, while the transfer control valve is opened, the liquid flows in and out from the transfer space through the flow channel. This allows the transfer cylinder and the transfer piston to move relative to each other and prevents the operating amount of the brake operating member from being transferred to the pressure generating section. On the other hand, when the distance of the relative movement increases and the transfer piston comes into contact with the bottomed surface of the transfer cylinder, the operating amount of the brake operating member is transferred to the pressure generating section.

When the transfer control valve is closed, the liquid is sealed in the transfer space. This prevents the transfer cylinder and the transfer piston from moving relative to each other. Therefore, the operating amount of the brake operating member is transferred directly to the pressure generating section.

In the above invention, it is preferable that the braking section include a pressure generating section that increases the pressure of fluid on the basis of the operating amount transferred from the transfer section; a friction generating section that generates a frictional force between the friction generating section and the wheels on the basis of the pressure of the fluid; and a pressure detecting section that detects fluid pressure of the pressure generating section; wherein the control unit control a braking force to be generated by the regenerating section in accordance with at least the output of the operating-amount detecting section and an output of the pressure detecting section.

With this configuration, the frictional braking force due to the braking section can be estimated by detecting the fluid pressure, which is increased on the basis of the operating amount. The regenerative braking force due to the regenerating section can be controlled on the basis of the estimated frictional braking force.

Thus, a braking force according to the operating amount acts on the wheels in either a state in which only a regenerative braking force acts or a state in which both a regenerative braking force and a frictional braking force act, thus keeping the relationship between the operating amount and the deceleration of the commercial vehicle constant, thereby preventing an excessive or too small braking force from acting on the wheels.

According to a second aspect of the present invention, there is provided a commercial vehicle including an electric motor used as a power source for running; and the commercial-vehicle braking system according to the first aspect of the present invention; wherein the electric motor is used as the regenerating section of the braking system.

According to the second aspect of the present invention, because the commercial vehicle braking system according to the first aspect of the present invention is provided, the amount of collection of electrical energy due to the regenerating section can be increased.

Since an electric motor used for running is used as the regenerating section, the configuration of the commercial vehicle can be simplified as compared with a case in which an electric motor and a regenerating section are disposed separately.

The commercial-vehicle braking system according to the first aspect of the present invention and the commercial vehicle according to the second aspect of the present invention are configured such that, when the operating amount of the brake operating member is smaller than a predetermined value, regenerative braking is performed by the regenerating section, whereas frictional braking is not performed by the braking section, and when the operating amount is greater than or equal to a predetermined value, regenerative braking is performed by the regenerating section and frictional braking is also performed by the braking section. During braking of a commercial vehicle, this offers the advantage of increasing the energy collection amount by regenerative braking and preventing a decrease in reliability.

Brief Description of Drawings

[Fig. 1] Fig. 1 is a schematic diagram for explaining the configuration of a braking system for a forklift according to a first embodiment of the present invention.
[Fig. 2] Fig. 2 is a flowchart describing the control of the forklift in Fig. 1 during braking.
[Fig. 3] Fig. 3 is a graph describing the relationship among a braking torque determined by a controller, vehicle speed, and degree of depression.
[Fig. 4] Fig. 4 is a graph showing the relationship between the degree of depression of a brake pedal and the braking force.
[Fig. 5] Fig. 5 is a graph showing the relationship between the degree of depression of the brake pedal and a reaction force transmitted to the operator.
[Fig. 6] Fig. 6 is a schematic diagram for describing another embodiment of a stroke sensor in Fig. 1.
[Fig. 7] Fig. 7 is a diagram for explaining the configuration of the braking system of a forklift according to a second embodiment of the present invention.
[Fig. 8] Fig. 8 is a flowchart describing part of the control during braking of the forklift in Fig. 7 specific to this embodiment.
[Fig. 9] Fig. 9 is a diagram for explaining the configuration of the braking system of a forklift according to a third embodiment of the present invention.
[Fig. 10] Fig. 10 is a flowchart describing part of the control during braking of the forklift in Fig. 9 specific to this embodiment.
[Fig. 11] Fig. 11 is a diagram for explaining the configuration of the braking system of a forklift according to a fourth embodiment of the present invention.
[Fig. 12] Fig. 12 is a flowchart describing part of the control during braking of the forklift in Fig. 10 specific to this embodiment.
[Fig. 13] Fig. 13 is a diagram for explaining the configuration of the braking system of a forklift according to a fifth embodiment of the present invention.
[Fig. 14] Fig. 14 is a flowchart describing part of the control during braking of the forklift in Fig. 13 specific to this embodiment.
[Fig. 15] Fig. 15 is a diagram for explaining the configuration of the braking system of a forklift according to a sixth embodiment of the present invention.
[Fig. 16] Fig. 16 is a flowchart describing part of the control during braking of the forklift in Fig. 15 specific to this embodiment.

Explanation of Reference Signs:

| | |
|---|---|
| 1, 101, 201, 301, 401, 601: | forklift (commercial vehicle) |
| 9: | brake pedal (brake-pedal operating member) |
| 11: | stroke sensor (operating-amount detecting section) |
| 13: | reactive spring (reaction-force generating section, elastic member) |
| 17, 217, 417: | play unit (transfer section) |
| 25: | transfer cylinder (output unit) |
| 27: | transfer piston (input unit) |

| 29: | bottomed surface (restricting portion) |
|---|---|
| 31: | gap (predetermined value) |
| 35: | electric motor (regenerating section) |
| 37: | inverter (control unit) |
| 39, 139, 239, 339, 439, 539, 639: | controller (control unit) |
| 45: | drum brake (braking section, friction generating section) |
| 148: | pressure sensor (pressure detecting section) |
| 231: | transfer space |
| 237: | control valve (transfer control valve) |
| 314: | reaction-force adjusting unit |
| 315: | hydraulic cylinder (reaction-force cylinder) |
| 316: | hydraulic piston (reaction-force piston) |
| 318: | control valve (reaction-force control valve) |
| 319: | space (reaction-force space) |
| 431: | electric actuator (transfer adjusting unit) |
| 631: | electric actuator (transfer adjusting unit) |

Best Mode for Carrying Out the Invention

[First Embodiment]

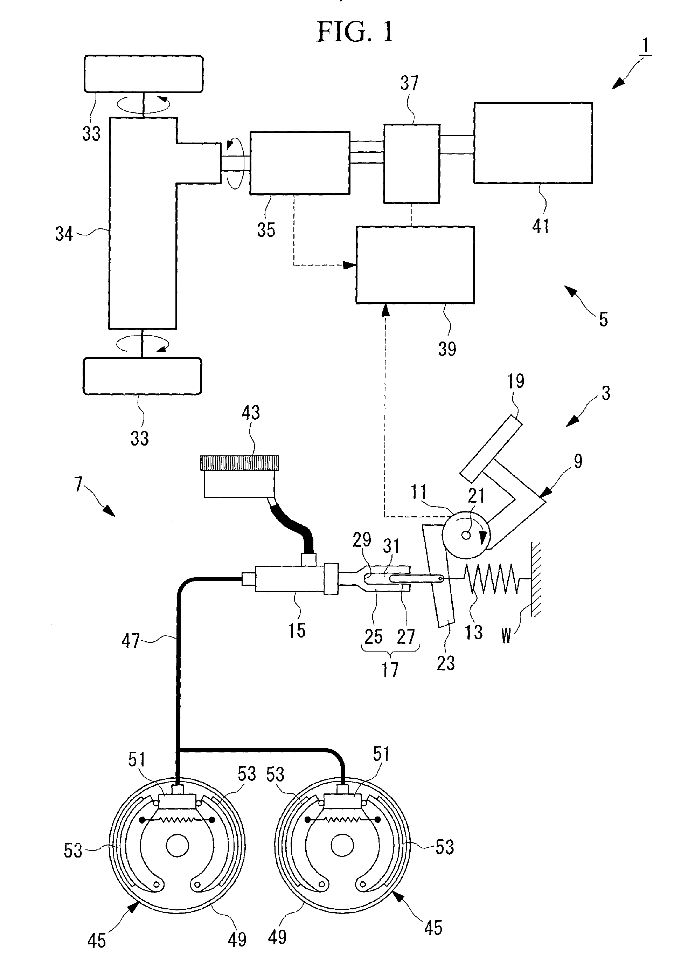

Referring to Figs. 1 to 6, a forklift according to a first embodiment of the present invention will be described below.

In this embodiment, the present invention is described when applied to a hybrid-powered forklift that uses an electric motor 35 and an engine (not shown) as the power source or to a battery-powered forklift (hereinafter referred to as a forklift) that is driven by an electric motor.

Fig. 1 is a diagram for explaining the configuration of a braking system for a forklift according to this embodiment.

As shown in Fig. 1, the forklift (commercial vehicle) 1 includes an input unit 3 for an operator (driver) to input a braking instruction by depression of a brake pedal 9, a regenerative braking unit 5 for applying a brake by collecting electrical energy from the kinetic energy of the forklift 1, and a mechanical braking unit 7 for applying a brake by converting the kinetic energy of the forklift to thermal energy.

The input unit 3 includes the brake pedal (brake operating member) 9 that the operator depresses, a stroke sensor (operating-amount detecting section) 11 for detecting the degree of depression (operating amount) of the brake pedal 9, a reactive spring (a reaction-force generating section, an elastic member) 13 that causes the brake pedal 9 to generate a reaction force in accordance with the degree of depression, and a play unit (transfer section) 17 that transfers the degree of depression to a master cylinder 15.

The brake pedal 9 includes a tread 19 that the operator depresses, a supporting portion 21 that rotatably supports the brake pedal 9, and a stroke portion 23 that rotates when the operator depresses the tread 19.

The stroke sensor 11 is disposed at the supporting portion 21 and detects the degree of depression by detecting the rotation angle of the brake pedal 9. The detection signal from the stroke sensor 11 is input to a controller 39. The stroke sensor may be any known angle sensor and is not particularly limited.

The reactive spring 13 is fixed to the stroke portion 23 at one end and is fixed to a wall W, such as the frame of the forklift 1, at the other end. When the tread 19 is depressed to rotate the stroke portion 23, the reactive spring 13 is stretched to generate a reaction force against the depression.

The play unit 17 includes a bottomed-tube-shaped transfer cylinder (output unit) 25 and a rod-like transfer piston (input unit) 27 disposed in the transfer cylinder 25 so as to be capable of moving relative to the transfer cylinder 25. The transfer cylinder 25 is connected to the master cylinder 15, whereas the transfer piston 27 is connected to the stroke portion 23.

The bottomed surface (restricting portion) 29 of the transfer cylinder 25 serves to restrict movement relative to the transfer piston 27. A gap (a predetermined value) 31 between the transfer cylinder 25 and the transfer piston 27 serves as a mechanical dead zone that restricts the transfer of the degree of depression from the transfer piston 27 to the transfer cylinder 25.

The regenerative braking unit 5 includes a power transmission mechanism 34 that transmits power between wheels 33 and the electric motor 35, the electric motor (regenerating section) 35 that generates electricity by the rotation of the wheels 33, an inverter (control unit) 37 and a controller (control unit) 39 that control the braking torque of the electric motor 35, and a battery 41 that stores the generated electricity.

The power transmission mechanism 34 is disposed between the wheels 33 and the electric motor 35 and includes a transmission, a differential gear, an axle (not shown) and so on.

The electric motor 35 performs regenerative braking by generating electricity by the rotation of the wheels 33, and it also drives the rotation of the wheels 33 by generating power using an alternating current supplied from the inverter 37.

The inverter 37 converts an alternating current generated by the electric motor 35 during regenerative braking to a direct current and converts a direct current supplied from the battery 41 to an alternating current for use in driving the electric motor 35.

The controller 39 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

The battery 41 is electrically connected to the inverter 37 and, during regenerative braking, stores a direct current (regenerative current) that is converted by the inverter 37 and supplies (discharges) a direct current to the inverter 37 to drive the rotation of the electric motor 35.

The mechanical braking unit 7 includes the master cylinder 15 that generates a hydraulic pressure in accordance with the degree of depression transferred, a reservoir tank 43 where oil flows in from and flows out to the master cylinder 15, and drum brakes (braking sections, friction generating sections) 45 that brake the rotation of the wheels 33 by the generated hydraulic pressure.

This configuration allows the plurality of wheels 33 to be acted upon by braking forces of substantially the same strength at substantially the same time even if the master cylinder 15 and the drum brakes 45 are arranged at separate positions.

The master cylinder 15 stores oil therein and generates a hydraulic pressure by compressing the oil in its interior in accordance with the degree of depression transferred by the play unit 17. The master cylinder 15 has a brake pipe 47 that transfers the generated hydraulic pressure to brake cylinders 51.

The reservoir tank 43 is an oil reservoir connected to the master cylinder 15 in a manner to allow circulation of oil between it and the master cylinder 15.

The drum brakes 45 each include a drum 49 fixed to the wheel 33, the brake cylinder 51 that pushes out a brake shoe 53 in accordance with the hydraulic pressure, and the brake shoe 53 that is pushed against the inner circumferential surface of the drum 49 to cause a braking force due to a frictional force.

Next, the operation of the forklift with the above configuration during braking will be described with reference to Figs. 1 to 6.

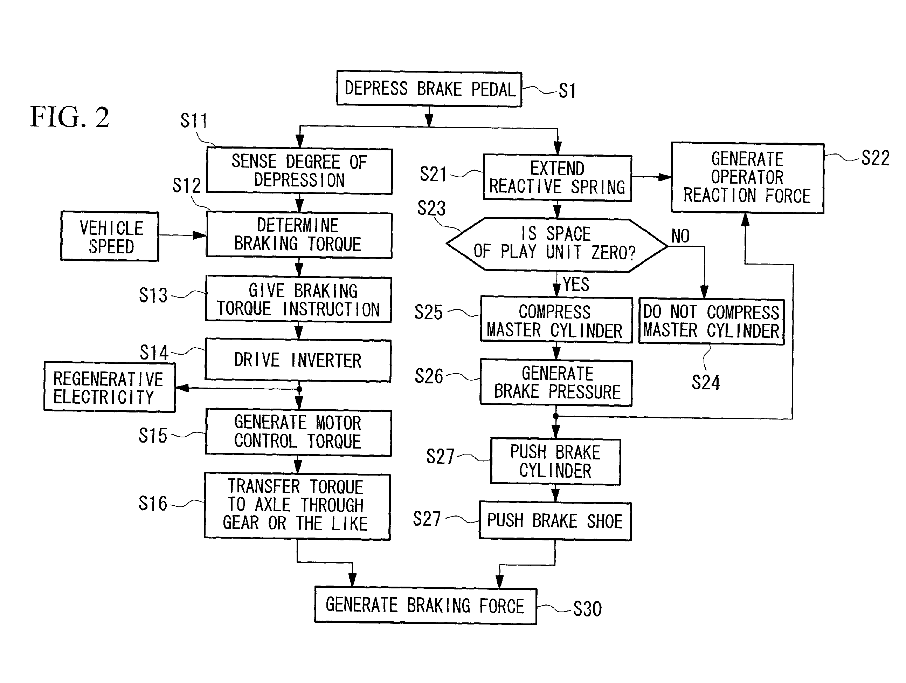

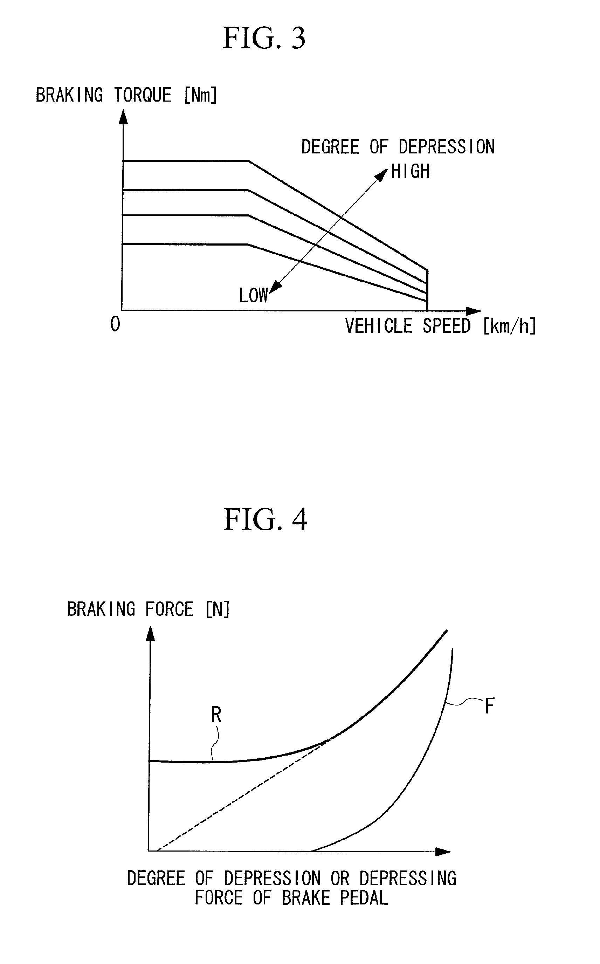

Fig. 2 is a flowchart describing the control during braking of the forklift in Fig. 1. Fig. 3 is a graph describing the relationship among a braking torque determined by the controller, the vehicle speed, and the degree of depression.

To brake the moving forklift 1, the operator depresses the tread 19 of the brake pedal 9, as shown in Fig. 1 (step S1).

The depressed brake pedal 9 rotates about the supporting portion 21, and the rotation angle is detected by the stroke sensor 11 (step S11).

The stroke portion 23 of the brake pedal 9 rotates toward the master cylinder 15 to stretch the reactive spring 13 (step S21) and to move the transfer piston 27 of the play unit 17 toward the master cylinder 15. The stretched reactive spring 13 generates a reaction force (operator reaction force) that acts in the direction opposite to the rotating direction of the stroke portion 23 (step S22).

When the degree of depression of the brake pedal 9 is less than the gap 31, the movement of the transfer piston 27 is absorbed in the gap 31 (the clearance of the play unit 17) between the transfer piston 27 and the transfer cylinder 25. Therefore, the master cylinder 15 is not compressed while some clearance of the play unit 17 remains (step S23 and step S24).

In this case, braking is not performed by the mechanical braking unit 7.

The detection signal of the stroke sensor 11 is input to the controller 39 of the regenerative braking unit 5, and the controller 39 determines a braking torque to be generated by the electric motor 35 (step S12).

As shown in Fig. 3, the determination of the braking torque is made also on the basis of the moving speed (vehicle speed) of the forklift 1, in addition to the detection signal (the degree of depression) of the stroke sensor 11.

The vehicle speed used for determining the braking torque is calculated from a signal associated with the rotational speed of the electric motor 35 which is input to the controller 39, as shown in Fig. 1.

The controller 39 outputs a braking torque instruction to the inverter 37 to cause the electric motor 35 to generate the determined braking toque (step S13). The inverter 37 is driven in accordance with the braking torque instruction to generate regenerative electrical power (step S14). The generated regenerative electrical power is stored in the battery 41.

On the other hand, the electric motor 35 generates a braking torque (step S15). The generated braking torque is transmitted to the power transmission mechanism 34 (step S16) to cause a braking force (regenerative braking force) at the wheels 33 (step S30).

When the operator increases the degree of depression of the brake pedal 9 to make the clearance of the play unit 17 zero (step S23), the transfer piston 27 comes into contact with the bottomed surface 29 of the transfer cylinder 25. Therefore, the degree of depression is transferred from the brake pedal 9 to the master cylinder 15 to push and compress the inner oil (step S25), which generates a braking pressure (step S26).

When the braking pressure is generated, a reaction force (an operator reaction force) that acts in the direction opposite to the rotating direction of the stroke portion 23 is also generated (step S22).

On the other hand, the braking force is transmitted to the brake cylinders 51 through the brake pipe 47 to push out the brake cylinders 51 (step S27). The brake cylinders push out the brake shoes against the inner circumferential surfaces of the drums (step S28). A frictional force acts between the brake shoes and the drums to apply a braking force (mechanical braking force) due to the frictional force to the wheels 33 (step S30).

Fig. 4 is a graph showing the relationship between the degree of depression of the brake pedal and the braking force.

The above control causes only a regenerative braking force R to act when the degree of depression of the brake pedal 9 is low, as shown in Fig. 4. When the degree of depression of the brake pedal 9 increases, a mechanical braking force F begins to act.

The broken line in Fig. 4 indicates the braking force of a conventional forklift equipped with only a mechanical braking unit.

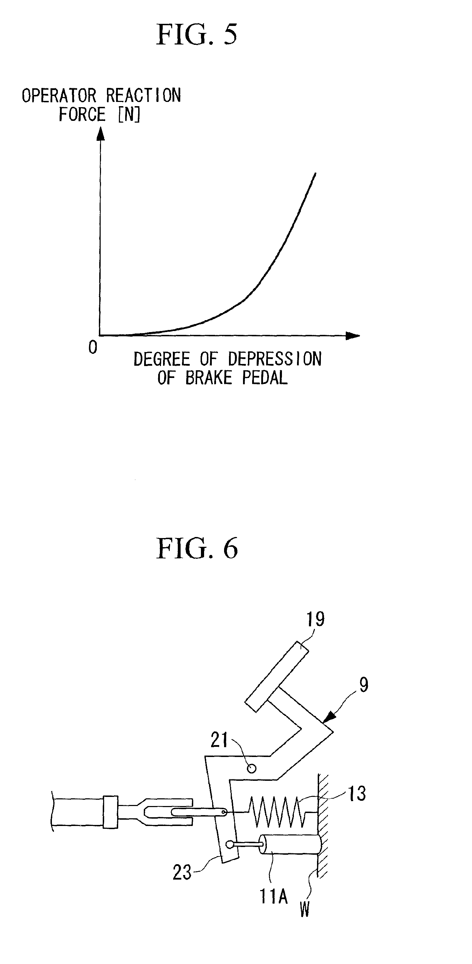

Fig. 5 is a graph showing the relationship between the degree of depression of a brake pedal and a reaction force transmitted to the operator.

As shown in Fig. 5, the operator reaction force transmitted to the operator is generated by the reactive spring 13 even in a range in which the degree of depression of the brake pedal 9 is low and so only a regenerative braking force acts. When the degree of depression of the brake pedal 9 increases to begin to generate a mechanical braking force, the operator reaction force increases also because of the reaction force generated by the master cylinder 15.

The operator reaction force is equal to the operator reaction force of the conventional forklift equipped with only the mechanical braking unit.

With the above configuration, when the degree of depression of the brake pedal 9 is less than the gap 31, regenerative braking by the electric motor 35 is performed according to the detection signal of the stroke sensor 11, but the degree of depression is not transferred from the play unit 17 to the drum brakes 45, so that braking by the drum brakes 45 is not performed.

That is, during the initial braking of the forklift 1, the kinetic energy of the forklift 1 is converted to electrical energy from the electric motor 35 without being consumed by frictional braking. Thus, the forklift 1 of this embodiment can increase the amount of collection of electrical energy, thereby providing a high regenerating capability.

Specifically, the relative movement of the transfer piston 27 and the transfer cylinder 25 of the play unit 17 allows the degree of depression of the brake pedal 9 to be absorbed by the gap 31 of the play unit 17. This can block transfer of the degree of depression from the transfer piston 27 to the transfer cylinder 25.

On the other hand, when the degree of depression is greater than or equal to the gap 31, regenerative braking by the electric motor 35 is performed in accordance with the output of the stroke sensor 11, and the degree of depression is transferred from the play unit 17 to the drum brakes 45 to cause frictional braking by the drum brakes 45. This ensures the same degree of reliability as that of the conventional forklift equipped with only the mechanical braking unit.

For example, when a braking force only by regenerative braking is insufficient for braking the forklift 1, regenerative braking and frictional braking can be performed at the same time by increasing the degree of depression of the brake pedal 9, thus ensuring a sufficient braking force to brake the forklift 1.

Also when sufficient regenerative braking cannot be performed because of overcharging of the battery 41 that stores regenerated electricity, frictional braking can be performed by increasing the degree of depression of the brake pedal 9, thus ensuring a braking force for braking the forklift 1.

Specifically, when the degree of depression increases to increase the distance of the relative movement between the transfer piston 27 and the transfer cylinder 25, the transfer piston 27 comes into contact with the bottomed surface 29 of the transfer cylinder 25. This restricts further relative movement of the transfer piston 27 and the transfer cylinder 25, so that the play unit 17 can transfer the degree of depression from the transfer piston 27 to the transfer cylinder 25.

Even if the degree of depression of the brake pedal 9 is less than the gap 31, the operator receives a reaction force (resisting force) from the reactive spring 13 when operating the brake pedal 9, and the strength of the generated reaction force changes in proportion to the degree of depression. This ensures roughly the same operative sensation as the conventional forklift equipped with only the mechanical braking unit.

Since the transfer piston 27 and the transfer cylinder 25 of the play unit 17 move relative to each other, the degree of depression of the brake pedal 9 is absorbed in the gap 31 of the play unit 17, so that it is blocked without being transferred from the transfer piston 27 to the transfer cylinder 25. During this time, the kinetic energy of the forklift 1 is converted to electrical energy from the electric motor 35 without being consumed by frictional braking. Thus, the forklift 1 of this embodiment has a higher amount of collection of electrical energy, thus offering a high regenerating capability.

Fig. 6 is a diagram for explaining another embodiment of the stroke sensor in Fig. 1.

The stroke sensor 11 may be an angle sensor that detects the rotation angle of the brake pedal 9, as in the above embodiment or, alternatively, a stroke sensor 11A that detects the rotation distance of the stroke portion 23 may be used as a sensor, as shown in Fig. 6; there is no particular limitation.

The regenerative braking unit may be controlled according to the degree of depression calculated from the rotation angle of the brake pedal detected by the stroke sensor, as in the above embodiment. Alternatively, the depressing force with which the operator depresses the brake pedal may be detected by a load sensor, such as a load cell, in place of the stroke sensor, and the regenerative braking unit may be controlled on the basis of the detected depressing force. There is no particular limitation.

[Second Embodiment]

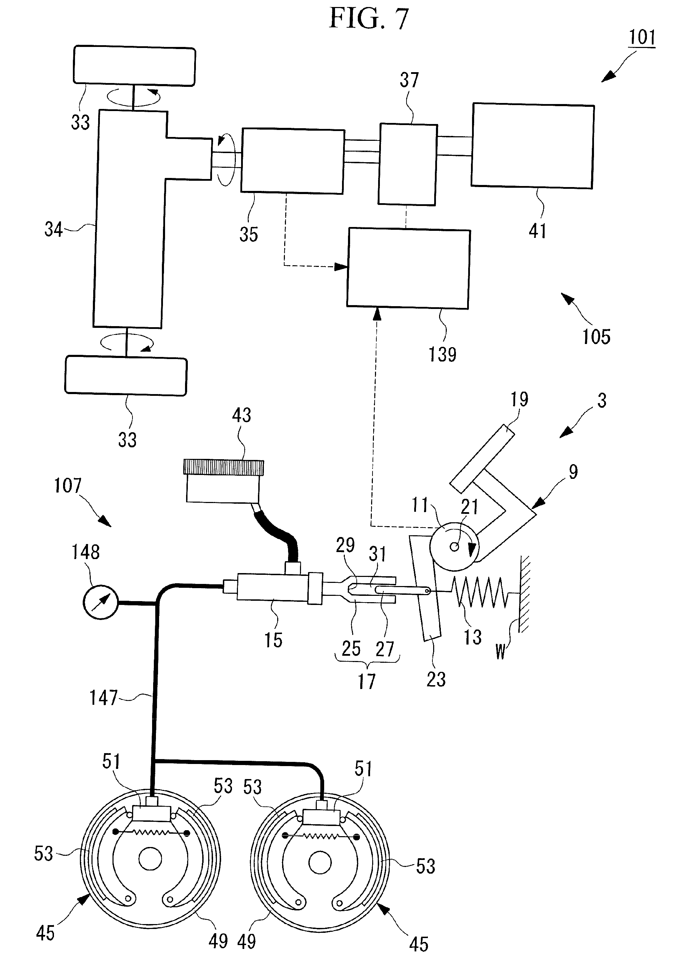

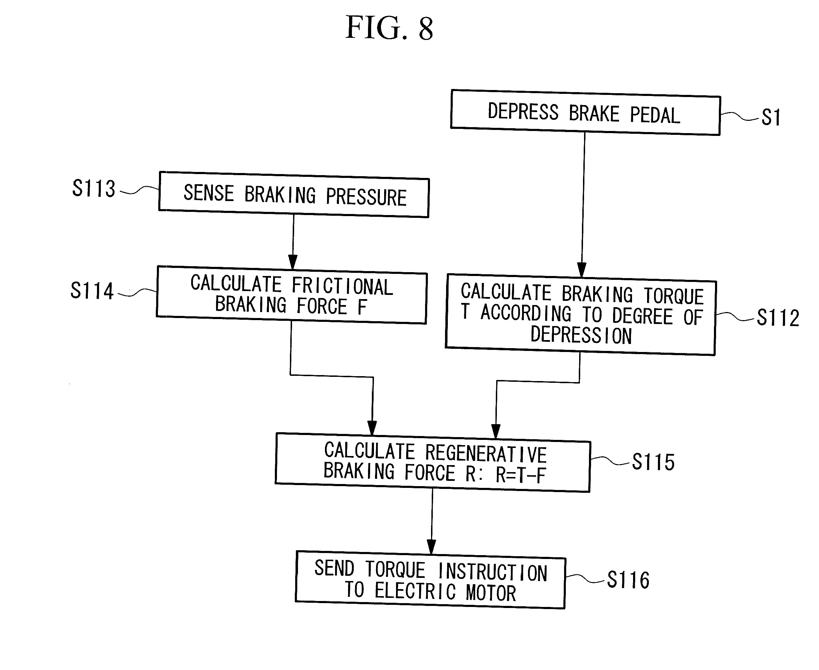

A second embodiment of the present invention will be described with reference to Figs. 7 and 8.

The forklift of this embodiment is similar to the first embodiment in basic structure but differs in the method for controlling the regenerative braking unit. Thus, in this embodiment, only the method for controlling the regenerative braking unit and its related components will be described with reference to Figs. 7 and 8, and descriptions of the other components will be omitted.

Fig. 7 is a diagram for explaining the configuration of the braking system of the forklift according to this embodiment.

The same components as those of the first embodiment are given the same reference numerals and their descriptions will be omitted.

As shown in Fig. 7, the forklift (commercial vehicle) 101 includes an input unit 3 for inputting a braking instruction by an operator depressing a brake pedal 9, a regenerative braking unit 105 for applying a brake by collecting electrical energy from the kinetic energy of the forklift 101, and a mechanical braking unit 107 for applying a brake by converting the kinetic energy of the forklift 101 to thermal energy.

The regenerative braking unit 105 includes a power transmission mechanism 34 that transmits power between wheels 33 and an electric motor 35, the electric motor 35 that generates electricity by the rotation of the wheels 33, an inverter 37 and a controller (control unit) 139 that control the braking torque of the electric motor 35, and a battery 41 that stores the generated electricity.

The controller 139 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

A method for controlling the braking torque will be specifically described in the description of the operation of the forklift 101 of this embodiment during braking.

The mechanical braking unit 107 includes a master cylinder 15 that generates a hydraulic pressure in accordance with the degree of depression transferred, a reservoir tank 43 where oil flows in and flows out from/to the master cylinder 15, and drum brakes 45 that brake the rotation of the wheels 33 with the generated hydraulic pressure.

The master cylinder 15 has a brake pipe 147 that transfers the generated hydraulic pressure to brake cylinders 51. The brake pipe 147 has a pressure sensor (pressure detecting section) 148 that measures the generated hydraulic pressure. The output of the pressure sensor 148 is input to the controller 139.

Next, the operation of the forklift with the above configuration during braking will be described with reference to Figs. 7 and 8.

Fig. 8 is a flowchart describing part of the control during braking of the forklift in Fig. 7 specific to this embodiment.

Since the operation of the mechanical braking unit 107 during braking is the same as that of the first embodiment, its description will be omitted.

To brake the moving forklift 101, the operator depresses the tread 19 of the brake pedal 9, as shown in Fig. 8 (step S1).

The depressed brake pedal 9 rotates about the supporting portion 21, and the rotation angle is detected by the stroke sensor 11 (step S11, see Fig. 2).

The detection signal from the stroke sensor 11 is input to the controller 139 of the regenerative braking section 105, and the controller 139 calculates a braking torque T to be exerted on the wheels 33 (step S112).

The pressure sensor 148 measures the hydraulic pressure in the brake pipe 147, and the output of the pressure sensor 148 is input to the controller 139 (step S113). The controller 139 calculates a frictional braking force F due to the mechanical braking unit 107 from the measured value of the hydraulic pressure that is input (step S114).

The controller 139 calculates a regenerative braking force R due to the regenerative braking unit 105 using the following expression (1) (step S115).

$$R = T - F \qquad \ldots (1)$$

After the regenerative braking force R has been calculated, a braking torque instruction is output to the inverter 37 to cause the electric motor 35 to generate the calculated regenerative braking force R (step S116).

Since the subsequent operation of the regenerative braking unit 105 during braking is the same as that of the first embodiment, its description will be omitted.

With the above configuration, a frictional braking force due to the drum brake 45 is estimated by detecting a braking pressure that is increased in accordance with the degree of depression, and a regenerative braking force due to the electric motor 35 is controlled on the basis of the estimated frictional braking force.

This control allows a braking force according to the degree of depression to act on the wheels 33 in either a state in which only a regenerative braking force acts or a state in which both a regenerative braking force and a frictional braking force act. This allows the relationship between the degree of depression and the deceleration of the forklift 101 to be kept constant, thereby preventing an excessive or too small braking force from acting on the wheels 33.

[Third Embodiment]

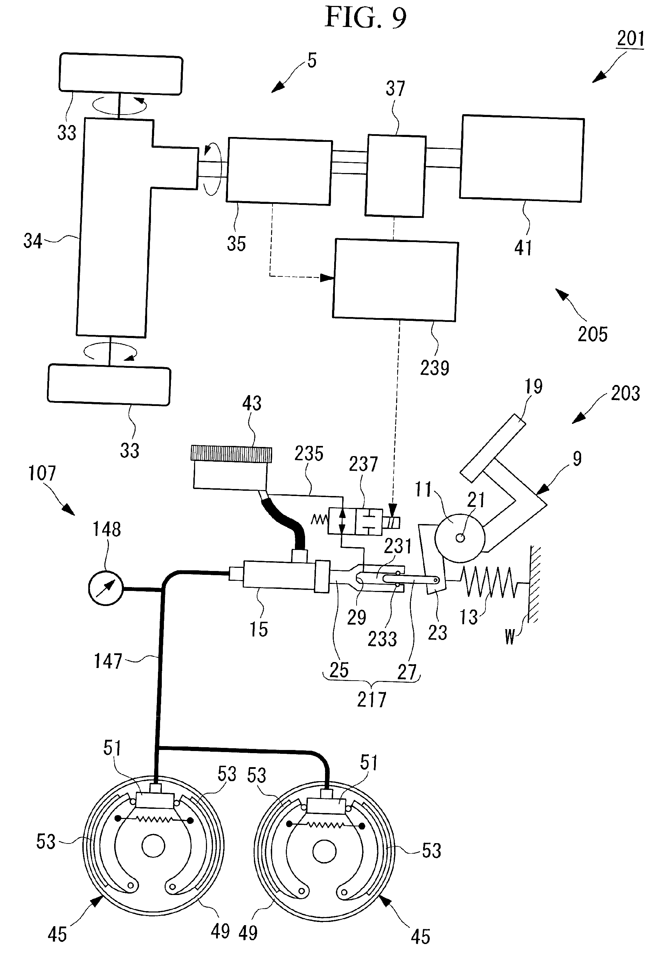

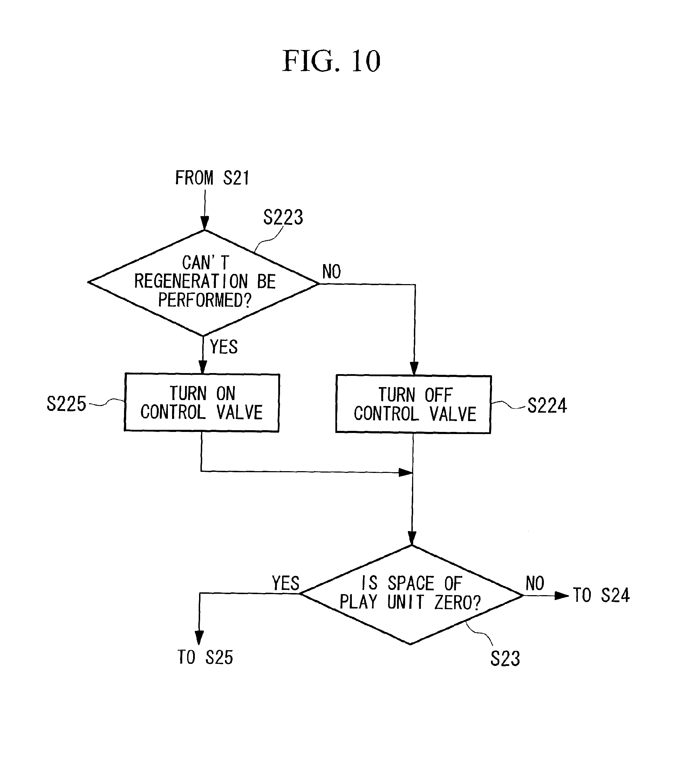

A third embodiment of the present invention will be described with reference to Figs. 9 and 10.

The forklift of this embodiment is similar to the second embodiment in basic structure but differs in the method for controlling the mechanical braking unit. Thus, in this embodiment, only the method for controlling the mechanical braking unit and its related components will be described with reference to Figs. 9 and 10, and descriptions of the other components will be omitted.

Fig. 9 is a diagram for explaining the configuration of the braking system of the forklift of this embodiment.

The same components as those of the second embodiment are given the same reference numerals and their descriptions will be omitted.

As shown in Fig. 9, the forklift (commercial vehicle) 201 includes an input unit 203 for inputting a braking instruction by an operator depressing a brake pedal 9, a regenerative braking unit 205 for applying a brake by collecting electrical energy from the kinetic energy of the forklift 201, and a mechanical braking unit 107 for applying a brake by converting the kinetic energy of the forklift 201 to thermal energy.

The input unit 203 includes the brake pedal 9 that the operator depresses, a stroke sensor 11 for detecting the degree of depression (operating amount) of the brake pedal 9, a reactive spring 13 that causes the brake pedal 9 to generate a reaction force in accordance with the degree of depression, and a play unit (transfer section) 217 that transfers the degree of depression to a master cylinder 15.

The play unit 217 includes a bottomed-tube-shaped transfer cylinder 25, a rod-like transfer piston 27 disposed in the transfer cylinder 25 so as to be capable of moving relative to the transfer cylinder 25, and a sealing portion 233 that seals a transfer space 231 between the transfer cylinder 25 and the transfer piston 27. The transfer space 231 sealed by the sealing portion 233 contains the same oil as the oil stored in the reservoir tank 43.

The transfer space 231 and the reservoir tank 43 are connected by a control pipe 235 so that the oil can circulate. The control pipe 235 has a control valve (transfer control valve) 237, which is a solenoid valve for controlling the flow of the oil. A control signal for controlling the opening and closing of the valve is input to the control valve 237 from the controller 239.

The bottomed surface 29 of the transfer cylinder 25 serves to restrict a movement relative to the transfer piston 27. The transfer space 231 between the transfer cylinder 25 and the transfer piston 27 serves as a mechanical dead zone that restricts the transfer of the degree of depression from the transfer piston 27 to the transfer cylinder 25.

The regenerative braking unit 205 includes a power transmission mechanism 34 that transmits power between wheels 33 and an electric motor 35, the electric motor 35 that generates electricity by the rotation of the wheels 33, an inverter 37 and a controller (control unit) 239 that control the braking torque of the electric motor 35, and a battery 41 that stores the generated electricity.

The controller 239 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

The controller 239 controls the opening and closing of the control valve 237. The control of the opening and closing of the control valve 237 will be described in detail in the following description of the braking operation of the forklift 201 of this embodiment.

Next, the operation of the forklift with the above configuration during braking will be described with reference to Figs. 9 and 10.

Fig. 10 is a flowchart describing part of the control during braking of the forklift in Fig. 9 specific to this embodiment.

Since the operation of the regenerative braking unit 205 during braking is the same as that of the second embodiment, its description will be omitted.

To brake the forklift 201, the operator depresses the brake pedal 9. The depressed brake pedal 9 rotates about the supporting portion 21, and the rotation angle is detected by the stroke sensor 11 (step S11, see Fig. 2).

The controller 239 determines whether regenerative braking can be performed on the basis of the output of a temperature sensor (not shown) provided at the electric motor 35, a current flowing from the electric motor 35 to the inverter 37, the voltage of the battery 41, and so on (step S223).

Specifically, determination of whether regenerative braking can be performed is made based on a fault in the electric motor 35, and determination of whether regenerative braking can be performed or the like is made based on overcharging of the battery 41.

If regenerative braking can be performed, the controller 239 outputs a control signal (OFF signal) for opening the control valve 237, and the control valve 237 is opened (step S224). Then, oil circulates freely between the transfer space 231 and the reservoir tank 43 to allow the relative movement of the transfer cylinder 25 and the transfer piston 27. Since the subsequent braking operation of the mechanical braking unit 107 is the same as that of the first embodiment, its description will be omitted.

On the other hand, if regenerative braking cannot be performed, the controller 239 outputs a control signal (ON signal) for closing the control valve 237, and the control valve 237 is closed (step S225). Then, the circulation of oil between the transfer space 231 and the reservoir tank 43 is shut off to seal the oil in the transfer space 231.

In this state, the transfer cylinder 25 and the transfer piston 27 cannot move relative to each other, so that the degree of depression is transferred from the stroke portion 23 to the master cylinder 15 (step S23 and step S24).

Since the braking operation of the mechanical braking unit 107 is the same as that of the first embodiment, its description will be omitted.

With the above configuration, if the controller 239 determines that regenerative braking can be performed, the control valve 237 is opened and oil flows into and out from the transfer space 231 through the control pipe 235 to allow the relative movement of the transfer cylinder 25 and the transfer piston 27. Thus, as in the first embodiment, if the distance of the relative movement is small, the degree of depression is not transferred to the master cylinder 15. On the other hand, if the distance of the relative movement increases to bring the transfer piston 27 into contact with the bottomed surface 29 of the transfer cylinder 25, the degree of depression is transferred to the master cylinder 15.

On the other hand, if the controller 239 determines that regenerative braking cannot be performed, the control valve 237 is closed, so that the oil is sealed in the transfer space 231 to prevent the relative movement of the transfer cylinder 25 and the transfer piston 27. Therefore, the degree of depression is transferred directly to the master cylinder 15 to allow mechanical braking by the mechanical braking unit 107 to act with priority, thereby ensuring roughly the same operability as the conventional forklift equipped with only the mechanical braking unit.

[Fourth Embodiment]

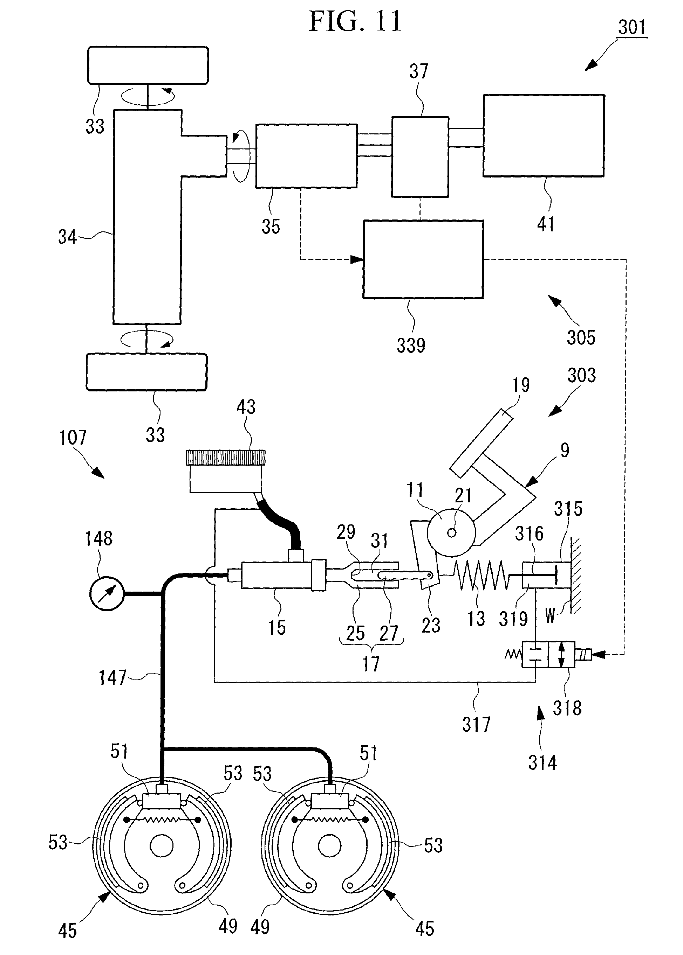

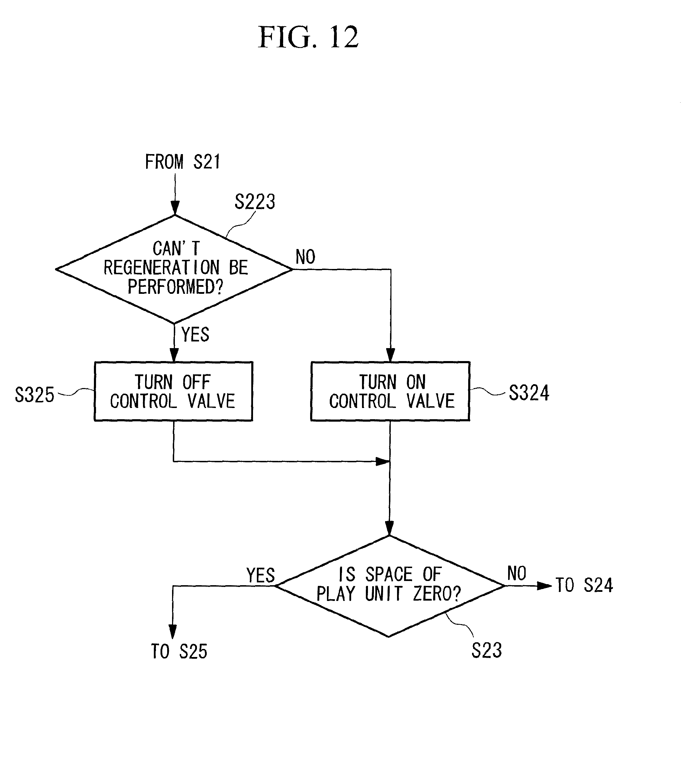

A fourth embodiment of the present invention will be described with reference to Figs. 11 and 12.

The forklift of this embodiment is similar to the second embodiment in basic structure but differs in the method for controlling the mechanical braking unit. Thus, in this embodiment, only the method for controlling the mechanical braking unit and its related components will be described with reference to Figs. 11 and 12, and descriptions of the other components will be omitted.

Fig. 11 is a diagram for explaining the configuration of the braking system of the forklift of this embodiment.

The same components as those of the second embodiment are given the same reference numerals and their descriptions will be omitted.

As shown in Fig. 11, the forklift (commercial vehicle) 301 includes an input unit 303 for inputting a braking instruction by an operator depressing a brake pedal 9, a regenerative braking unit 305 for applying a brake by collecting electrical energy from the kinetic energy of the forklift 301, and a mechanical braking unit 107 for applying a brake by converting the kinetic energy of the forklift 301 to thermal energy.

The input unit 303 includes the brake pedal 9 that the operator depresses, a stroke sensor 11 for detecting the degree of depression (operating amount) of the brake pedal 9, a reactive spring 13 that causes the brake pedal 9 to generate a reaction force in accordance with the degree of depression, a reaction-force adjusting unit 314 that adjusts the reaction force generated by the reactive spring 13, and a play unit 17 that transfers the degree of depression to a master cylinder 15.

The reaction-force adjusting unit 314 includes a hydraulic cylinder (reaction-force cylinder) 315 fixed to the wall W, a hydraulic piston (reaction-force piston) 316 fixed to the other end of the reactive spring 13, an oil pipe 317 that connects the hydraulic cylinder 315 and the reservoir tank 43 together, and a control valve (reaction-force control valve) 318, which is a solenoid valve for controlling the circulation of oil in the oil pipe 317.

The hydraulic piston 316 is disposed so as to be capable of moving in the rotating direction of the stroke portion 23. The space (reaction-force space) between the hydraulic cylinder 315 and the hydraulic piston 316 is filled with oil. As the hydraulic piston 316 moves, the oil circulates between the hydraulic cylinder 315 and the reservoir tank 43 through the oil pipe 317.

An open/close signal for controlling the opening and closing of the control valve 318 is input from the controller 339, whereby circulation of the oil in the oil pipe 317 is controlled. When the control valve 318 is closed, the circulation of oil in the oil pipe 317 is stopped to restrict the movement of the hydraulic piston 316. On the other hand, when the control valve 318 is opened, the circulation of oil in the oil pipe 317 is freed to allow the hydraulic piston 316 to move freely.

The regenerative braking unit 305 includes a power transmission mechanism 34 that transmits power between wheels 33 and an electric motor 35, the electric motor 35 that generates electricity by the rotation of the wheels 33, an inverter 37 and the controller (control unit) 339 that control the braking torque of the electric motor 35, and a battery 41 that stores the generated electricity.

The controller 339 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

The controller 339 controls the opening and closing of the control valve 318. The control of the opening and closing of the control valve 318 will be described in detail in the following description of the braking operation of the forklift 301 of this embodiment.

Next, the operation of the forklift with the above configuration during braking will be described with reference to Figs. 11 and 12.

Fig. 12 is a flowchart describing part of the control during braking of the forklift in Fig. 10 specific to this embodiment.

Since the operation of the regenerative braking unit 305 during braking is the same as that of the second embodiment, its description will be omitted.

The depressed brake pedal 9 rotates about the supporting portion 21, and the rotation angle is detected by the stroke sensor 11 (step S11, see Fig. 2).

The controller 239 determines whether regenerative braking can be performed on the basis of the output of a temperature sensor (not shown) provided at the electric motor 35, a current flowing from the electric motor 35 to the inverter 37, the voltage of the battery 41, and so on (step S223).

If regenerative braking can be performed, the controller 339 outputs a control signal (ON signal) for closing the control valve 318, and the control valve 318 is opened (step S324). Then, the circulation of oil between the space 319 and the reservoir tank 43 is shut off to seal the oil in the space 319.

In this state, the movement of the hydraulic cylinder 31525 is restricted, and the reactive spring 13 is stretched according to the degree of depression to generate a reaction force.

Since the subsequent braking operation of the mechanical braking unit 107 is the same as that of the first embodiment, its description will be omitted.

On the other hand, if regenerative braking cannot be performed, the controller 339 outputs a control signal (OFF signal) for opening the control valve 318, and the control valve 318 is opened (step S325). Then, oil circulates freely between the space 319 and the reservoir tank 43 to allow the hydraulic piston 316 to move.

When the operator depresses the brake pedal 9 in this state, the hydraulic piston 316 moves together with the reactive spring 13 and the stroke portion 23, so that a reaction force is not generated by the reactive spring 13. This facilitates contact of the transmitting piston 27 with the transfer cylinder 25. Thus, braking by the mechanical braking unit 107 is started immediately after the brake pedal 9 is depressed.

Since the subsequent braking operation of the mechanical braking unit 107 is the same as that of the first embodiment, its description will be omitted.

With the above configuration, if the controller 339 determines that regenerative braking cannot be performed, the control valve 318 is opened and oil flows into and out from the space 319 through the control pipe 317 to allow the hydraulic piston 316 to move, so that the reactive spring 13 moves freely. This eliminates the reaction force in the range of depression in which only regenerative braking acts.

On the other hand, if the controller 239 determines that regenerative braking can be performed, the control valve 318 is closed, so that the oil is sealed in the space 319 to prevent the movement of the hydraulic piston 316. Thus, a reaction force is generated also in the range of depression in which only regenerative braking acts.

Therefore, when the brake pedal 9 is depressed while the control valve 318 is opened with the same power as that while the control valve 318 is closed, the degree of depression easily exceeds the range of depression in which only regenerative braking acts to immediately start braking by the mechanical braking unit 107. In other words, when regenerative braking cannot be performed due to a fault in the electric motor or a full charge of the battery, the mechanical braking unit 107 can be operated on a priority basis, thus ensuring the same degree of operability as the conventional forklift equipped with only the mechanical braking unit.

[Fifth Embodiment]

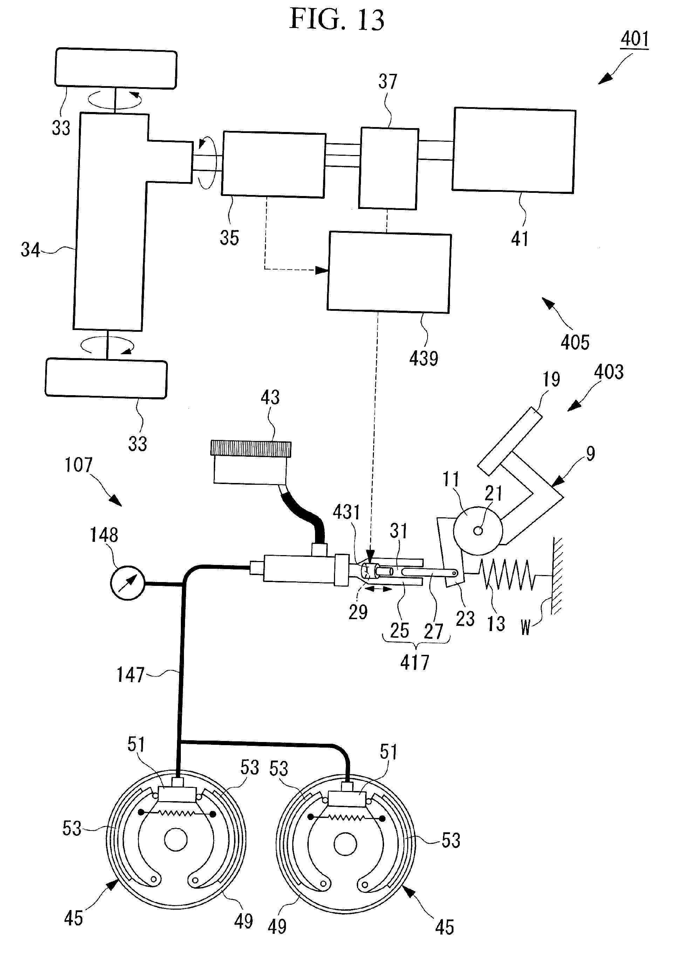

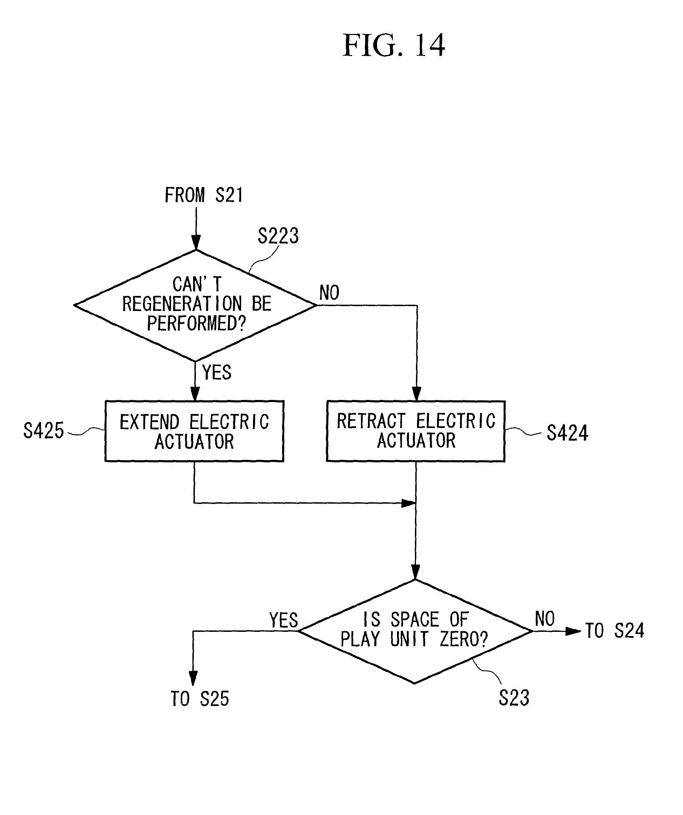

A fifth embodiment of the present invention will be described with reference to Figs. 13 and 14.

The forklift of this embodiment is similar to the second embodiment in basic structure but differs in the method for controlling the mechanical braking unit. Thus, in this embodiment, only the method for controlling the mechanical braking unit and its related components will be described with reference to Figs. 13 and 14, and descriptions of the other components will be omitted.

Fig. 13 is a diagram for explaining the configuration of the braking system of the forklift of this embodiment.

The same components as those of the second embodiment are given the same reference numerals and their descriptions will be omitted.

As shown in Fig. 13, the forklift (the commercial vehicle) 401 includes an input unit 403 for inputting a braking instruction by an operator depressing a brake pedal 9, a regenerative braking unit 405 for applying a brake by collecting electrical energy from the kinetic energy of the forklift 401, and a mechanical braking unit 107 for applying a brake by converting the kinetic energy of the forklift 401 to thermal energy.

The input unit 403 includes the brake pedal 9 that the operator depresses, a stroke sensor 11 for detecting the degree of depression (operating amount) of the brake pedal 9, a reactive spring 13 that causes the brake pedal 9 to generate a reaction force in accordance with the degree of depression, and a play unit 417 that transfers the degree of depression to a master cylinder 15.

The play unit 417 includes a closed-end cylindrical transfer cylinder 25, a rod-like transfer piston 27 disposed in the transfer cylinder 25 so as to be capable of moving relative to the transfer cylinder 25, and an electric actuator (transfer adjusting unit) 431 provided at the bottomed surface 29.

The electric actuator 431 extends and retracts according to a control signal for controlling the electric actuator 431 that is input from the controller 439. The electric actuator 431 serves to adjust the distance of the relative movement of the transfer cylinder 25 and the transfer piston 27 by extension and retraction.

The regenerative braking unit 205 includes a power transmission mechanism 34 that transmits power between wheels 33 and an electric motor 35, the electric motor 35 that generates electricity by the rotation of the wheels 33, an inverter 37 and a controller (control unit) 439 that control the braking torque of the electric motor 35, and a battery 41 that stores the generated electricity.

The controller 439 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

The controller 439 controls the extension and retraction of the electric actuator 431. The control of the extension and retraction of the electric actuator 431 will be described in detail in the following description of the operation during braking of the forklift 401 of this embodiment.

Next, the operation of the forklift with the above configuration during braking will be described with reference to Figs. 13 and 14.

Fig. 14 is a flowchart describing part of the control during braking of the forklift in Fig. 13 specific to this embodiment.

Since the operation of the regenerative braking unit 205 during braking is the same as that of the second embodiment, its description will be omitted.

To brake the forklift 201, the operator depresses the brake pedal 9. The depressed brake pedal 9 rotates about the supporting portion 21, and the rotation angle is detected by the stroke sensor 11 (step S11, see Fig. 2).

The controller 239 determines whether regenerative braking can be performed on the basis of the output of a temperature sensor (not shown) provided at the electric motor 35, a current flowing from the electric motor 35 to the inverter 37, the voltage of the battery 41, and so on (step S223).

Specifically, determination of whether regenerative braking can be performed is made based on a fault in the electric motor 35, and determination of whether regenerative braking can be performed or the like is made based on overcharging of the battery 41.

If regenerative braking can be performed, the controller 439 outputs a control signal for retracting the electric actuator 431, and the electric actuator 431 retracts (step S424). This ensures a distance that allows the relative movement of the transfer cylinder 25 and the transfer piston 27. Since the subsequent braking operation of the mechanical braking unit 107 is the same as that of the first embodiment, its description will be omitted.

The degree of retraction of the electric actuator 431 is calculated by the controller 439 from the speed of the forklift 401, the characteristics of the electric motor 35, and so on. Specifically, when the speed is high, the degree of retraction is decreased, and when the speed is low, the degree of retraction is increased. When the braking torque generated from the electric motor is high, the degree of retraction is increased, and when the braking torque is low, the degree of retraction is decreased.

On the other hand, if regenerative braking cannot be performed, the controller 439 outputs a control signal for extending the electric actuator 431, and the electric actuator 431 is extended (step S425). The degree of extension of the electric actuator 431 is calculated by the controller 439 from the speed of the forklift 401 and so on. Specifically, when the speed is high, the degree of extension is increased, and when the speed is low, the degree of extension is decreased.

When the electric actuator 431 extends, the distance of the relative movement of the transfer cylinder 25 and the transfer piston 27 decreases. In this state, the transfer cylinder 25 comes into contact with the electric actuator 431 with a low degree of depression, so that the degree of depression is transferred from the stroke portion 23 to the master cylinder 15.

With the above configuration, the minimum amount of depression at which the frictional braking by the mechanical braking unit 107 occurs can be adjusted by adjusting the distance of the relative movement of the transfer cylinder 25 and the transfer piston 27 using the electric actuator 431. This allows the range of depression in which only regenerative braking acts to be adjusted according to the speed of the forklift 401, thus providing a constant braking force and deceleration with the same degree of depression.

Even if regenerative braking cannot be performed when there is a fault in the electric motor 35 or when the battery 41 is fully charged, the mechanical braking unit 107 can be operated on a priority basis, thus ensuring the same degree of operability as the conventional forklift equipped with only the mechanical braking unit.

[Sixth Embodiment]

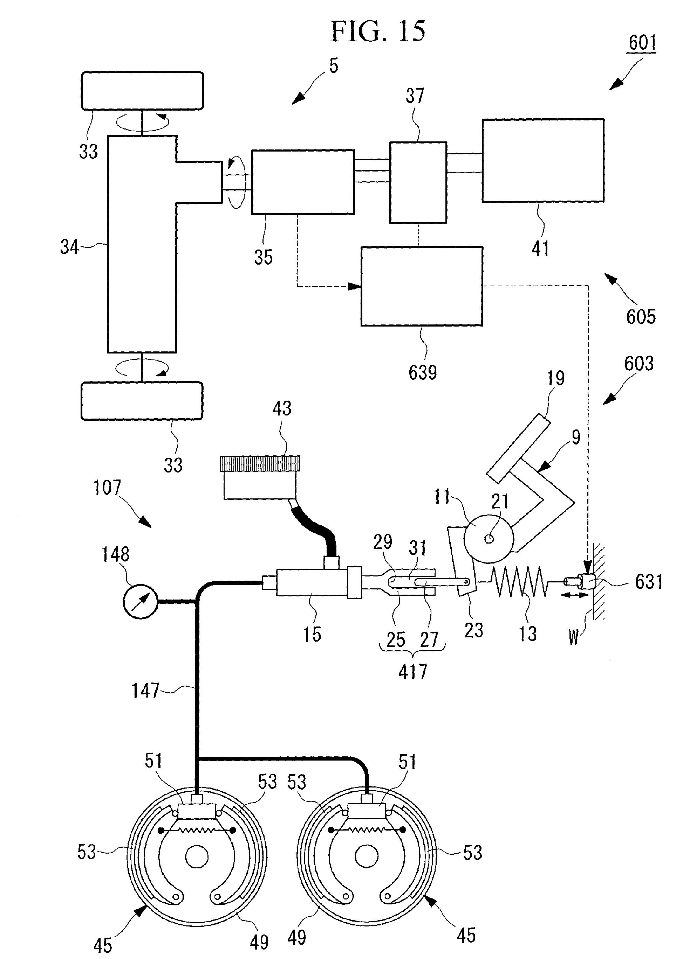

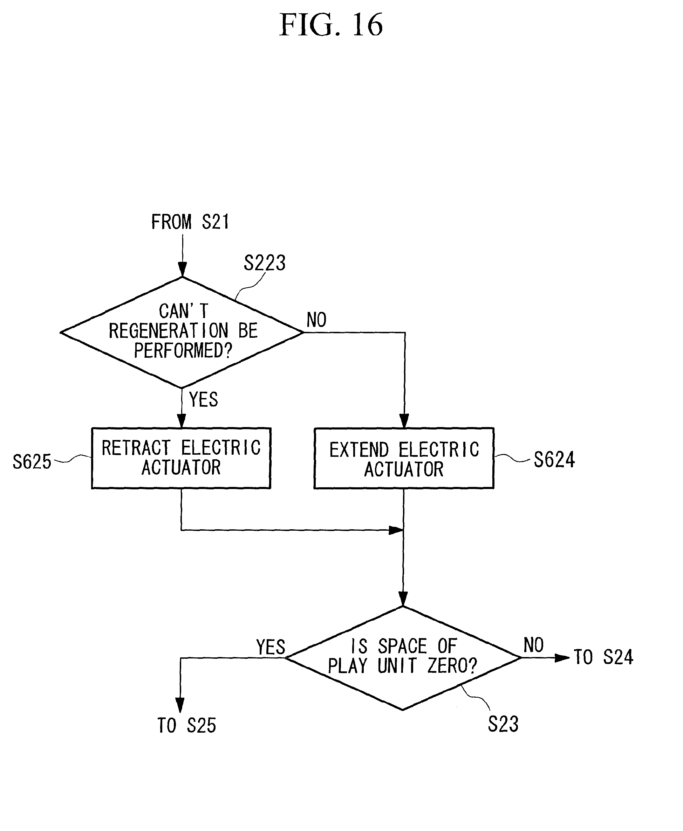

A sixth embodiment of the present invention will be described with reference to Figs. 15 and 16.

The forklift of this embodiment is similar to the second embodiment in basic structure but differs in the method for controlling the mechanical braking unit. Thus, in this embodiment, only the method for controlling the mechanical braking unit and its related components will be described with reference to Figs. 15 and 16, and descriptions of the other components will be omitted.

Fig. 15 is a diagram for explaining the configuration of the braking system of the forklift of this embodiment.

The same components as those of the second embodiment are given the same reference numerals and their descriptions will be omitted.

As shown in Fig. 15, the forklift (the commercial vehicle) 601 includes an input unit 603 for inputting a braking instruction by an operator depressing a brake pedal 9, a regenerative braking unit 605 for applying a brake by collecting electrical energy from the kinetic energy of the forklift 601, and a mechanical braking unit 107 for applying a brake by converting the kinetic energy of the forklift 601 to thermal energy.

The input unit 403 includes the brake pedal 9 that the operator depresses, a stroke sensor 11 for detecting the degree of depression (operating amount) of the brake pedal 9, a reactive spring 13 that causes the brake pedal 9 to generate a reaction force in accordance with the degree of depression, an electric actuator (transfer adjusting unit) 631 that adjusts a reactive force generated by the reactive spring 13, and a play unit 17 that transfers the degree of depression to a master cylinder 15.

The electric actuator 631 is disposed between the wall W and the reactive spring 13. The electric actuator 631 extends and retracts according to a control signal for controlling the electric actuator 631, which is input from the controller 639.

The regenerative braking unit 605 includes a power transmission mechanism 34 that transmits power between wheels 33 and an electric motor 35, the electric motor 35 that generates electricity by the rotation of the wheels 33, an inverter 37 and a controller (control unit) 639 that control the braking torque of the electric motor 35, and a battery 41 that stores the generated electricity.

The controller 639 controls the inverter 37 to thereby control a braking torque (or a regenerative torque) generated by the electric motor 35 during regenerative braking, while on the other hand controlling an alternating current to be supplied, to thereby control a driving torque generated by the electric motor 35.

The controller 639 controls the extension and retraction of the electric actuator 631. The control of the extension and retraction of the electric actuator 631 will be described in detail in the following description of the operation during braking of the forklift 601 of this embodiment.

Next, the operation of the forklift with the above configuration during braking will be described with reference to Figs. 15 and 16.

Fig. 16 is a flowchart describing part of the control during braking of the forklift in Fig. 15 specific to this embodiment.

Since the operation of the regenerative braking unit 205 during braking is the same as that of the second embodiment, its description will be omitted.

To brake the forklift 601, the operator depresses the brake pedal 9. The depressed brake pedal 9 rotates about the supporting portion 21, and the rotation angle is detected by the stroke sensor 11 (step S11, see Fig. 2).

The controller 639 determines whether regenerative braking can be performed on the basis of the output of a temperature sensor (not shown) provided at the electric motor 35, a current flowing from the electric motor 35 to the inverter 37, the voltage of the battery 41, and so on (step S223).

Specifically, determination of whether regenerative braking can be performed is made based on a fault in the electric motor 35, and determination of whether regenerative braking can be performed or the like is made based on overcharging of the battery 41.

If regenerative braking can be performed, the controller 639 outputs a control signal for retracting the electric actuator 631, and the electric actuator 631 retracts (step S624).

When the electric actuator 631 retracts, the range of depression in which a reactive force is not generated by the reactive spring 13 decreases. When the brake pedal 9 is depressed, a reaction force is generated by the reactive spring 13. Therefore, the degree of depression of the brake pedal 9 easily falls within the range of the depression in which regenerative braking is performed, so that regenerative braking is performed by the regenerative braking unit 605.

Since the subsequent braking operation of the mechanical braking unit 107 is the same as that of the first embodiment, its description will be omitted.

The degree of retraction of the electric actuator 631 is calculated by the controller 639 from the speed of the forklift 601, the characteristics of the electric motor 35, and so on. Specifically, when the vehicle speed is high, the degree of retraction is decreased, and when the speed is low, the degree of retraction is increased. When the braking torque generated from the electric motor is high, the degree of retraction is increased, and when the braking torque is low, the degree of retraction is decreased.

On the other hand, if regenerative braking cannot be performed, the controller 639 outputs a control signal for extending the electric actuator 631, and the electric actuator 631 is extended (step S625). The degree of extension of the electric actuator 631 is calculated by the controller 639 from the speed of the forklift 601 and so on. Specifically, when the vehicle speed is high, the degree of extension is increased, and when the speed is low, the degree of extension is decreased.

When the electric actuator 631 extends, the range of depression in which a reaction force is not generated by the reactive spring 13 increases.

Since a reaction force is not generated when the brake pedal 9 is depressed in this state, the degree of depression of the brake pedal 9 easily exceeds the range of depression in which regenerative braking is performed. Therefore, the transfer cylinder 25 comes into contact with the transfer piston 27 relatively early, and the degree of depression is transferred from the stroke portion 23 to the master cylinder 15.

With the above configuration, the minimum amount of depression at which a reaction force is generated and the strength of the reaction force to be generated can be adjusted by changing the disposition of the reactive spring 13 in the moving direction of the stroke portion to adjust the amount of deformation of the reactive spring 13. This allows the range of depression in which only regenerative braking acts and the strength of the operator reaction force to be adjusted according to the speed of the forklift 601, thus providing a constant braking force and deceleration.

Even if regenerative braking cannot be performed when there is a fault in the electric motor 35 or when the battery 41 is fully charged, the mechanical braking unit 107 can be operated on a priority basis, thus ensuring the same degree of operability as the conventional forklift equipped with only the mechanical braking unit.

Furthermore, the operator reaction force and the degree of depression at which the mechanical braking unit 107 starts to act can be adjusted by the operator adjusting the extension and retraction of the electric actuator 631.

For such adjustment, it is preferable to provide means for resetting the adjustment by the operator. One example is a method for automatically returning the extension and retraction of the electric actuator 631 to an initial value when the power source of the forklift 601 is shut off.

**Claims**

1.  A commercial-vehicle braking system comprising:

    a brake operating member that a driver operates;
    an operating-amount detecting section that detects the operating amount of the brake operating member;
    a regenerating section that brakes the rotation of wheels by converting the rotation of the wheels to electrical energy;
    a control unit that controls the regenerating section on the basis of an output of the operating-amount detecting section;
    a transfer section that, when the operating amount is smaller than a predetermined value, blocks transfer of the operating amount and, when the operating amount is larger than the predetermined value, transfers an operating amount obtained by subtracting the predetermined value from the operating amount; and
    a braking section that brakes the rotation of the wheels by a frictional force on the basis of the operating amount transferred from the transfer section.

2.  The commercial-vehicle braking system according to Claim 1, further comprising a reaction-force generating section that generates a reaction force against the operation of the brake operating member.

**3.** The commercial-vehicle braking system according to Claim 2, wherein
the reaction-force generating section is an elastic member that generates the reaction force by deforming in accordance with the operating amount; and
further comprising a reaction-force adjusting unit that adjusts the strength of the reaction force by changing the disposition of the reaction-force generating section.

**4.** The commercial-vehicle braking system according to Claim 2, wherein
the reaction-force generating section is an elastic member that generates the reaction force by deforming in accordance with the operating amount;
one of a bottomed-tube-shaped reaction-force cylinder and a rod-like reaction-force piston disposed in the reaction-force cylinder so as to be capable of moving relative thereto is disposed at one end of the elastic member;
a reaction-force space between the reaction-force cylinder and the reaction-force piston is filled with liquid; and
a reaction-force control valve that controls the flow of the liquid is provided in a flow channel connecting the outside of the reaction-force cylinder and the reaction-force space.

**5.** The commercial-vehicle braking system according to one of Claims 1 to 4, wherein the braking section includes a pressure generating section that increases the pressure of fluid on the basis of the operating amount transferred from the transfer section and a friction generating section that generates a frictional force between the friction generating section and the wheels on the basis of the pressure of the fluid.

**6.** The commercial-vehicle braking system according to Claim 5, wherein
the transfer section includes an input unit connected to the brake operating member and an output unit connected to the pressure generating section and disposed so as to be capable of moving relative to the input unit; and
at least one of the input unit and the output unit has a restricting portion that restricts the distance of the relative movement.

**7.** The commercial-vehicle braking system according to Claim 6, further comprising a transfer adjusting unit that adjusts the distance of the relative movement of the input unit and the output unit.

**8.** The commercial-vehicle braking system according to Claim 6 or 7, wherein
one of the input unit and the output unit is a bottomed-tube-shaped transfer cylinder and the other is a rod-like transfer piston disposed in the transfer cylinder so as to be capable of moving relative thereto;
the transfer space between the transfer cylinder and the transfer piston is filled with liquid; and
a transfer control valve for controlling the flow of the liquid is provided in a flow channel connecting the outside of the transfer cylinder and the transfer space.

**9.** The commercial-vehicle braking system according to one of Claims 5 to 8, further comprising
a pressure detecting section that detects fluid pressure of the pressure generating section; and
wherein the control unit controls a braking force to be generated by the regenerating section in accordance with at least the output of the operating-amount detecting section and an output of the pressure detecting section.

**10.** A commercial vehicle comprising:

an electric motor used as a power source for running; and
the commercial-vehicle braking system according to one of Claims 1 to 9;
wherein the electric motor is used as the regenerating section of the braking system.

# FIG. 1

# FIG. 2

```
                    ┌─────────────────────┐
                    │ DEPRESS BRAKE PEDAL │──S1
                    └─────────────────────┘
```

**S11** → SENSE DEGREE OF DEPRESSION

**S12** → DETERMINE BRAKING TORQUE ← VEHICLE SPEED

**S13** → GIVE BRAKING TORQUE INSTRUCTION

**S14** → DRIVE INVERTER → REGENERATIVE ELECTRICITY

**S15** → GENERATE MOTOR CONTROL TORQUE

**S16** → TRANSFER TORQUE TO AXLE THROUGH GEAR OR THE LIKE

**S21** → EXTEND REACTIVE SPRING

**S22** → GENERATE OPERATOR REACTION FORCE

**S23** → IS SPACE OF PLAY UNIT ZERO?

NO → DO NOT COMPRESS MASTER CYLINDER **S24**

YES → **S25** COMPRESS MASTER CYLINDER

**S26** → GENERATE BRAKE PRESSURE

**S27** → PUSH BRAKE CYLINDER

**S27** → PUSH BRAKE SHOE

**S30** → GENERATE BRAKING FORCE

EP 2 058 189 A1

# FIG. 3

BRAKING TORQUE [Nm]

DEGREE OF DEPRESSION

HIGH

LOW

0        VEHICLE SPEED [km/h]

# FIG. 4

BRAKING FORCE [N]

R

F

DEGREE OF DEPRESSION OR DEPRESSING
FORCE OF BRAKE PEDAL

## FIG. 5

OPERATOR REACTION
FORCE [N]

0

DEGREE OF DEPRESSION
OF BRAKE PEDAL

## FIG. 6

# FIG. 7

FIG. 8

DEPRESS BRAKE PEDAL — S1

CALCULATE BRAKING TORQUE T ACCORDING TO DEGREE OF DEPRESSION — S112

SENSE BRAKING PRESSURE — S113

CALCULATE FRICTIONAL BRAKING FORCE F — S114

CALCULATE REGENERATIVE BRAKING FORCE R: R=T-F — S115

SEND TORQUE INSTRUCTION TO ELECTRIC MOTOR — S116

# FIG. 9

# FIG. 10

FROM S21

S223

CAN'T
REGENERATION BE
PERFORMED?

NO

YES

S225 — TURN ON
CONTROL VALVE

TURN OFF
CONTROL VALVE — S224

YES — IS SPACE OF
PLAY UNIT ZERO? — NO — TO S24

TO S25

S23

# FIG. 11

# FIG. 12

FROM S21

S223

CAN'T REGENERATION BE PERFORMED?

NO

YES

S325 — TURN OFF CONTROL VALVE

TURN ON CONTROL VALVE — S324

YES — IS SPACE OF PLAY UNIT ZERO? — NO → TO S24

TO S25

S23

# FIG. 13

# FIG. 14

FROM S21

S223

CAN'T
REGENERATION BE
PERFORMED?

NO

YES

S425 —— EXTEND ELECTRIC
ACTUATOR

RETRACT ELECTRIC
ACTUATOR —— S424

YES   IS SPACE OF
PLAY UNIT ZERO?   NO   ► TO S24

TO S25

S23

# FIG. 15

# FIG. 16

FROM S21

S223

CAN'T
REGENERATION BE
PERFORMED?

NO

YES

S625 —— RETRACT ELECTRIC
ACTUATOR

EXTEND ELECTRIC
ACTUATOR —— S624

YES IS SPACE OF
PLAY UNIT ZERO?

NO TO S24

TO S25

S23

## INTERNATIONAL SEARCH REPORT

| International application No. |
|---|
| PCT/JP2007/071691 |

A. CLASSIFICATION OF SUBJECT MATTER
*B60T8/17*(2006.01)i, *B60T7/06*(2006.01)i, *B60T13/12*(2006.01)i, *B66F9/22*(2006.01)i, *B66F9/24*(2006.01)i

According to International Patent Classification (IPC) or to both national classification and IPC

B. FIELDS SEARCHED

Minimum documentation searched (classification system followed by classification symbols)
B60T8/17, B60T7/06, B60T13/12, B66F9/22, B66F9/24

Documentation searched other than minimum documentation to the extent that such documents are included in the fields searched
Jitsuyo Shinan Koho        1922-1996    Jitsuyo Shinan Toroku Koho    1996-2008
Kokai Jitsuyo Shinan Koho   1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | CD-ROM of the specification and drawings annexed to the request of Japanese Utility Model Application No. 104001/1991(Laid-open No. 049537/1993) (Mitsubishi Motors Corp.), 29 June, 1993 (29.06.93), Par. Nos. [0015] to [0027]; Figs. 1 to 5 (Family: none) | 1-2,5-6,10<br>3-4,9<br>7-8 |
| X<br>Y<br>A | JP 2004-338546 A (Nippon Yusoki Kabushiki Kaisha), 02 December, 2004 (02.12.04), Par. Nos. [0019] to [0032]; Fig. 2 (Family: none) | 1-2,10<br>3-4<br>5-9 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 February, 2008 (14.02.08) | Date of mailing of the international search report<br>26 February, 2008 (26.02.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/071691

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-054982 A (Sugai General Industries<br>Ltd.),<br>23 February, 2006 (23.02.06),<br>Par. Nos. [0029] to [0045]; Figs. 6 to 9<br>(Family: none) | 1-2,10<br>3-4<br>5-9 |
| Y | JP 2005-263074 A (Toyoda Iron Works Co., Ltd.,<br>Toyota Motor Corp.),<br>29 September, 2005 (29.09.05),<br>Par. Nos. [0024] to [0031]; all drawings<br>& US 2005-204855 A1      & EP 1577184 A2 | 3-4 |
| Y | JP 2005-219687 A (Toyoda Iron Works Co., Ltd.),<br>18 August, 2005 (18.08.05),<br>Par. Nos. [0016] to [0036]<br>& US 2005-172753 A1      & EP 1562097 A2 | 3-4 |
| Y | JP 10-271608 A (Mitsubishi Motors Corp.),<br>09 October, 1998 (09.10.98),<br>All pages; all drawings<br>(Family: none) | 9 |
| Y | JP 07-336805 A (Toyota Motor Corp.),<br>22 December, 1995 (22.12.95),<br>All pages; all drawings<br>(Family: none) | 9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004338546 A
- JP HEI10271608 B